# EUROPEAN PATENT SPECIFICATION

(11) **EP 2 251 562 B1**
(45) Date of publication and mention of the grant of the patent: **04.06.2014**
(21) Application number: 09715892.7
(22) Date of filing: 25.02.2009
(51) Int. Cl.: F16F 9/04, B61F 5/08, B61F 5/10, F16F 15/04

(54) **AIR SPRING DEVICE**
LUFTFEDERVORRICHTUNG
DISPOSITIF À RESSORT PNEUMATIQUE

(30) Priority: 25.02.2008 JP 2008043309; 27.02.2008 JP 2008045683
(43) Date of publication of application: 17.11.2010
(73) Proprietor: Bridgestone Corporation, Tokyo 104-8340 (JP)
(72) Inventor: TOYAMA, Akihiko, Yokohama-shi Kanagawa 244-8510 (JP)
(74) Representative: Waldren, Robin Michael
(86) International application number: PCT/JP2009/053451
(87) International publication number: WO 2009/107679

(56) References cited:
- DE-U1- 20 018 194
- FR-A1- 2 896 220
- JP-A- 9 011 898
- JP-A- 2002 013 572
- JP-A- 2002 206 582
- JP-A- 2006 015 994
- JP-A- 2006 105 244
- JP-A- 2006 329 280
- JP-U- 59 191 442
- US-A1- 2006 170 140

## Description

### TECHNICAL FIELD

The present invention relates to an air spring device, which may be suitably applied to bolsterless bogies for railway vehicles. In particular, the present invention provides an air spring device capable of allowing the vertical spring constant of the entire device to be maintained sufficiently small over a wide displacement range, in order to realize an improved riding comfort of the railway vehicles, preserving on the other hand resilient spring characteristics of the air spring even in a deflated condition due to puncture or the like, in order to realize a safe running of the vehicle, and ensuring an effective elastic support of the vertical and horizontal forces to be achieved even under a large deformation upon application of a large vertical load.

### BACKGROUND ART

The air spring device of this type is often called as "European type" and disclosed, for example, in Patent Document 1. The air spring device as known from this document includes an outer cylinder; an inner cylinder; a diaphragm placed across the two cylinders; a support member having an outer peripheral face in the form of a conical or pyramidal face, an annular elastic body is placed across the outer peripheral face of the support member and the inner cylinder, and a shock-absorbing member having an elastic member placed between the inner cylinder and the support member so that an elastic deformation of the elastic member due to a relative approaching movement between the r inner cylinder and the support member is started after the elastic body has been elastically deformed by a predetermined amount.

In this instance, the shock-absorbing member in the form of an elastic member is arranged between the inner cylinder and the support member, and configured so that an elastic deformation of the elastic member due to relative approaching movement between the inner cylinder and the support member is started after the elastic body has been elastically deformed by a predetermined amount. Thus, it is described that, when a load acting on the outer cylinder exceeds a predetermined level, the elasticity due to the shock-absorbing member is added to the elasticity of the elastic body, thereby allowing the spring constant to be readily increased. It is also described that the disclosed configuration provides a state where the air spring has resilient spring characteristics due to a relatively small spring constant in the case of a relatively light load, and another state where the air spring has stiff spring characteristics due to a relatively large spring constant in the case of a relatively heavy load. And, as a result, it is described that an improved air spring is realized, which includes a support member with an outer peripheral face of frusto-conical or frusto-pyramidal shape, wherein the annular elastic body placed across the outer peripheral face of the support member and the inner cylinder provides nonlinear characteristics allowing the elastic body to have relatively resilient spring characteristics in usual normal operation, and relatively stiff spring characteristics upon application of a relatively heavy load. Incidentally, it is further described that when the elastic body is made of laminated rubbers, the support member and the inner cylinder are resiliently supported by each other in a stable manner.
- Patent Document 1: JP 2006-329280A

Reference is also made to US2006/0170140.

### DISCLOSURE OF THE INVENTION

### (Task to be solved by the Invention)

The above-mentioned prior art is featured by a series arrangement of two kind of conical elements, i.e., an elastic member and a cushion member both of conical shape, which are arranged on the lower side of a diaphragm extending across the inner and outer cylinders. Thus, when the elastic member and the cushion member are both deformed to their limit positions, the support member and the inner cylinder are brought into a metal contact through a non-elastic element in the cushion member, so that a subsequent elastic support of the vertical load becomes impossible. Furthermore, as for the input of a horizontal load, although a relative sliding movement is possible between the inner and outer cylinders after the metal contact, a subsequent elastic support of the horizontal load becomes impossible.

The task of the present invention is to eliminate the above-mentioned problems of the prior art. Thus, it is a primary object of the present invention to provide an improved air spring device, which sufficiently exhibits resilient spring characteristics of the air spring in the vertical direction even in such deflated condition due to puncture or the like, that the intended spring function cannot be achieved, in order to allow a safety driving while preserving an acceptable riding comfort. It is another object of the present invention to provide an improved air spring device, which operates even upon application of a large vertical load due to occurrence of such large deformation that the resilient spring characteristics reach the limit value, so as to elastically support the vertical load with a stiff spring constant. It is still another object of the present invention to provide an improved air spring device, which achieves a resilient and elastic support of a horizontal load regardless of the magnitude of the vertical load.

### (Means for solving the Task)

According to the present invention, there is provided an air spring device comprising, as being arranged in a series connection with each other: an air spring having an interior filled with pressurized gas, such as air or inert gas, defined by an upper face plate, a lower face plate, and a cylindrical flexible diaphragm body having end portions tightly connected to the respective face plates; a shear spring means including an inner cylinder and an outer cylinder, as well as annular rubber members and annular rigid plates, which are alternately arranged between opposite peripheral surfaces of the inner and outer cylinders, the shear spring means being subjected to a shearing deformation in response to a vertical load; and a compression spring means including an upper end ring and a lower end support plate, as well as rubber members and rigid plates, which are alternately arranged between the upper end ring and the lower end support plate, the compression spring means being subjected to a compressive deformation in response to a vertical load; wherein said air spring means further comprises an abutment means for restricting a relative displacement between the inner and outer cylinders of the shear spring means in a vertical direction so that a gap is left between the inner cylinder and the lower end support plate when the relative displacement is restricted.

It is preferred that the shear spring means comprises a laminated structure in which the rubber members of frusto-conical shape and the rigid plates of frusto-conical shape are alternately laminated with each other, wherein the laminated structure is joined to the inner and outer cylinders.

The compression spring means comprises a laminated structure in which the rubber members of annular shape and the rigid plates of annular shape are alternately laminated with each other, wherein the laminated structure is joined to the lower end support member and the upper end ring, and the outer cylinder of the shear spring means has a flange, which is fitted with the upper end ring and said inner cylinder of the shear spring means is secured to a lower surface of the lower face plate.

It is preferred that the shear spring means and the compression spring means are successively arranged as seen from the side of the air spring, and the lower face plate is provided with an abutment member, which is brought into abutment with the compression spring means so as to restrict the displacement amount of the shear spring means. In this instance, the abutment member is preferably configured so as to leave a gap between the lower end support plate and the shear spring means, in particular, the rigid member that projects to the lowermost position under an elastic deformation of the shear spring means, after the abutment member has been brought into abutment with the side of the compression spring means and, more preferably, when the compression spring means is subjected to a compressive deformation.

It is preferred that that inner cylinder of the shear spring means is in for form of a cylindrical body and secured to a lower surface of the lower face plate, the cylindrical flexible diaphragm body of the air spring has a self-sealing structure so as to tightly seal the diaphragm body against the upper and lower face plates under the action of the gas filled in its interior, and at least one of the abutment member and a member on the side of the compression spring means is provided with a cushion member arranged between these elements. The cushion member, which may be comprised of rubber, plastics, various fibers or leather, is preferably integrated with a rubber member of the shear spring means.

In order that an intended vibration damping function is achieved by the air spring, *per se,* during its normal state, it is preferred that the upper face plate has a throttle passage that narrows a gas passage communicating the air spring with an auxiliary air tank.

### (Effects of the Invention)

In the air spring device according to the present invention, the air spring, the shear spring means and the compression spring means are arranged in series alignment with each other. Such an arrangement ensures that, due to the virtue of series-connected springs, the function of the spring means having a lower spring constant becomes prevailing with reference to the application of a vertical load so that the load is primarily supported by the air spring and the shear spring means in a resilient and elastic manner. On the other hand, once the abutment member begins to be operative in response to the increase in the vertical load beyond the deformation limit of the shear spring means, the load is primarily supported by the air spring and the compression spring means with relatively stiff spring constant. The same applies to a situation wherein the vertical load is elastically supported by both of the shear spring means and the compression spring means in a deflated state of the air spring due to puncture or the like, when the air spring is unable to perform its intended function.

When a horizontal load is applied to the air spring device, the load can be resiliently supported in elastic manner, primarily by a horizontal deformation of the air spring and the shearing deformation of the compression spring means. Such an elastic support of the horizontal load is fully achieved whether or not the air spring is in a deflated state, by virtue of the series-connection of the shear spring means and the compression spring means, whereby the shearing spring constant of the compression spring means becomes prevailing regardless of the magnitude of the vertical load.

Thus, in the air spring device according to the present invention, even if a large vertical load is applied to such an extent that the shear spring means undergoes a deformation beyond its deformation limit and the subsequent elastic support of the vertical load is achieved solely by the function of the compression spring means, the horizontal load can be resiliently supported in elastic manner by the shearing deformation of the compression spring means, whether or not the air spring is in a deflated state.

Incidentally, if the shear spring means and the compression spring means are successively arranged as seen from the side of the sir spring, and the lower face plate is provided with an abutment member, which is brought into abutment with the compression spring means so as to restrict the displacement amount of the shear spring means, and the abutment member is configured so as to leave a gap between the lower end support plate and the shear spring means after the abutment member has been brought into abutment with the side of the compression spring means, then it is possible to fully achieve the above-mentioned various functions with a simple structure of the spring device. It is further possible to cause the compression spring means to fully smoothly and positively function for elastically supporting the horizontal load, even when the shear spring means has been deformed to its limit position under the vertical load.

In the present invention, if the shear spring means comprises a laminated structure wherein the rubber members of frusto-conical shape and the rigid plates of frusto-conical shape are alternately laminated with each other, and the laminated structure is joined to the inner and outer cylinders, the rubber members are caused to deform not only in the shearing direction but also in the compression direction to provide a more or less incremental tendency of the spring constant. Thus, as compared to a case wherein only the shearing deformation is permitted, it is possible to suppress the absolute deformation amount of the rubber members, thereby providing improved durability of the rubber members. It is on the other hand possible for the shear spring means to contribute to the achievement of the elastic function in response to application of the horizontal load.

Also, if the compression spring means comprises a laminated structure wherein the rubber members of annular shape and the rigid plates of annular shape, both being horizontally arranged, for example, are alternately laminated with each other, and such laminated structure is joined to the lower end support member and the upper end ring, both being horizontally arranged, and the outer cylinder of the shear spring means has a flange, which is fitted with the upper end ring, it is possible for the compression spring means to exhibit a relatively stiff spring constant upon application of the vertical load, and a relatively resilient spring constant under the shearing deformation of the annular rubber members upon application of the horizontal load.

By the way, if the inner cylinder of the shear spring means with a frusto-pyramidal shape is secured, for example, to the lower surface of the lower face plate with its side of the bottom portion having a large surface,
in association with the dimension of the hollow portion of the compression spring means, the shear spring means can be arranged partly in the hollow portion to save the occupation space of the device and allow minimization of the external dimension, thereby realizing railway vehicles with a low floor height. On the other hand, it is further possible for the shear spring means and the compression spring means to function as series-connected springs in response to a horizontal load such that the function of the spring means having a lower spring constant plays a prevailing role with reference to the horizontal load by virtue of series-connected springs.

In the above-mentioned arrangement of the air spring device, if the cylindrical flexible diaphragm body of the air spring has a self-sealing structure, fixture members for attaching the cylindrical flexible diaphragm body to the face plates can be eliminated, thereby allowing an effective reduction of the number of parts and simplification of the maintenance or exchange of the cylindrical flexible diaphragm body. Also, the height of the air spring itself can be reduced to more readily realize railway vehicles with a low floor height, in conjunction with what has been described above.

In the present invention, if at least one of the abutment member and a member on the side of said compression spring means is provided with a cushion member arranged between these elements and comprised of rubber, plastics, various fibers or leather, it is possible to effectively suppress shocks and noise generation when the abutment member is brought into abutment with the member on the side of the compression spring means. In this instance, if the cushion member is integrated with a rubber member of the shear spring means so that the rubber member of the shear spring means covers the surface of the flange portion on the outer cylinder of the shear spring means, which is arranged on the compression spring means, it is possible to reduce the cost and the number of assembling steps for the incorporation of the cushion member.

Furthermore, if the upper face plate has a throttle passage that narrows a gas passage communicating the air spring with an auxiliary air tank, it is possible for the air spring to be communicated with the auxiliary tank through a non-deformable passage with the designed shape and dimension, regardless of the mode of displacement and/or deformation in the shear spring means and the compression spring means between the lower face plate and the lower end support plate. Thus, it is possible to provide an always constant vibration damping function of the air spring device, without being affected by the displacement or deformation of the structural elements of the device.

Moreover, if the throttle passage is provided for upper face plate, it is unnecessary to provide gas passages in any of the lower face plate of the air spring, the interior of the compression spring means below the lower face plate, and the lower end support plate, thereby allowing a significant simplification in structure of the gas passage, *per se,* as well as the sealing mechanism of the gas passage

### BRIEF DESCRIPTION OF THE DRAWINGS

FIG. 1 is a longitudinal sectional view showing one embodiment of the present invention;
FIG. 2 is a longitudinal sectional view showing another embodiment of the present invention;
FIG. 3 is a graph showing the relationship between the vertical load and the spring constant; and
FIG. 4 is a graph showing the relationship between the horizontal load and the spring constant.

### (Reference Symbols)

- 1: Upper face plate
- 2: Lower face plate
- 3: Cylindrical flexible diaphragm
- 4: Air spring
- 5: Shear spring means
- 5a: Rubber members
- 5b, 6b: Rigid plates
- 6: Compression spring means
- 7a: Inner cylinder
- 7b: Outer cylinder
- 7c: Flange surface
- 8: Lower end support plate
- 8c: Lower boss
- 9: Upper end ring
- 10: Abutment member
- 11: Cushion member
- 12: Polytetrafluoroethylene layers
- 13: Upper boss
- 14: Auxiliary tank
- 15: Gas passage
- 16: Throttle passage
- x, y: Gaps

### BEST MODE FOR CARRYING OUT THE INVENTION

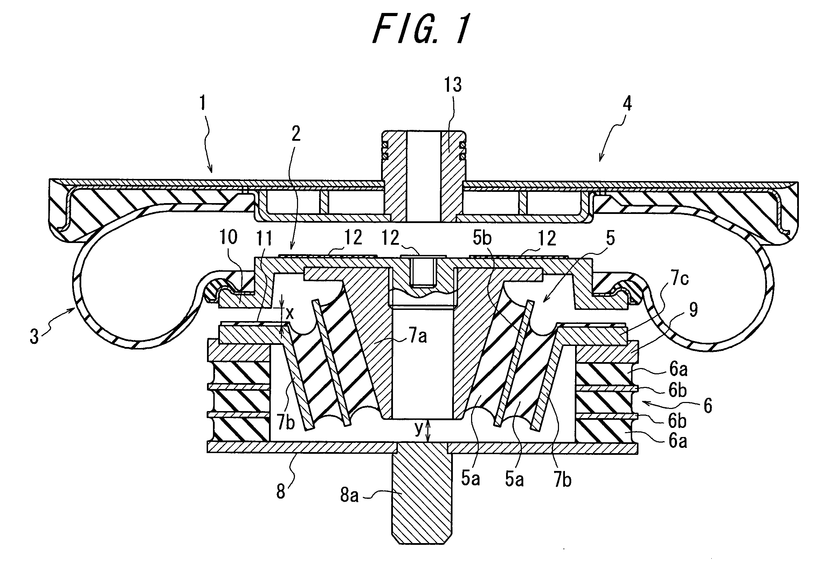

FIG. 1 is a longitudinal sectional view showing one embodiment of the present invention, wherein reference numeral 1 denotes an upper face plate arranged on the side of the vehicle body with a horizontal posture, by way of example, reference numeral 2 denotes a lower face plate, and reference numeral 3 denotes a cylindrical, flexible diaphragm with a self-seal structure, having its ends tightly connected to the upper and lower face plates 1, 2, in the illustrated embodiment. These elements 1, 2, 3 constitute an air spring 4 having an interior filled with a gas under a predetermined pressure, such as air, inert gas or the like.

In the illustrated embodiment, on the side of the lower face plate in the air spring 4, a shear spring means 5 and a compression spring means 6 are arranged in series with each other t provide a series-aligned structure of the air spring 4, the shear spring means 5 and the compression spring means 6 in the stated sequence. Such a structure provides resilient spring characteristics wherein the function of the spring means having a lower spring constant plays a predominant role with respect to application of a vertical load.

In the illustrated embodiment, furthermore, the shear spring means 5 is arranged to surround its inner cylinder to be described below. The shear spring means 5 includes rubber members 5a of hollow frustum shape, such as frusto-conical or frusto-pyramidal shape, so that the dimension of the front shape, side shape or the like is gradually decreases toward the lower side of the drawings, and rigid plates 5b of frusto-pyramidal shape geometrically similar to the rubber members 5a, wherein the rubber members 5a and the rigid plates are alternately laminated one above the other. The laminated structure so obtained is joined to an inner cylinder 7a in the form of a cylindrical body for the purpose of weight saving, having an outer surface of similarly frusto-pyramidal shape, and also to an outer cylinder 7b. Alternatively, the frusto-pyramidal shape of the shear spring means 5 may have a dimension that decreases toward the upper side of the drawings.

The compression spring means 6 is arranged as being spaced from the lower side of the lower face plate 2. The compression spring means includes horizontal annular rubber plates 6a and similarly annular rigid plates 6b, which are alternately laminated one above the other. The laminated structure so obtained is joined to a lower end support plate 8, which is secured to a carriage in its horizontal posture, for example, and also joined to an upper end ring 9. In the illustrated embodiment, the rubber plates 6a, the rigid plate 6b and the upper end ring 9 are same in terms of their inner diameter.

Thus, the respective spring means 5, 6 are arranged between the lower face plate 2 of the air spring 4 and the lower end support plate 8 which is arranged as being spaced from the lower side of the lower face plate 2. In this instance, the lower end surface of the compression spring means 6 is joined to the lower end support plate 8, while the inner cylinder 7a of the shear spring means 5 is secured, with its side of the bottom portion having a large surface, to the lower surface of the lower face plate 2. On the other hand, the flange portion 7c of the outer cylinder 7b is fitted to, and engaged with the upper surface of the upper end ring 9. There is provided an abutment member 10, which is formed on the lower face plate 2 to project downwards in the drawings, but which is spaced upwards from the flange portion 7c of the outer cylinder 7b with a predetermined gap x therefrom. This gap x may be smaller than a gap y between the shear spring means 5 and the lower end support plate 8, in particular between the inner cylinder 7a which projects into the compression spring means 6 and undergoes the largest downward displacement upon operation of the shear spring means 5, and the lower boss 8a for securing the lower end support plate 8 to the carriage. In this way, since the shear spring means 5 is arranged to project into the compression spring means 6, these spring means constitute a series-connected structure to realize a resilient spring characteristics in response to the application of horizontal load.

In the illustrated embodiment, reference numeral 11 denotes a cushion member which is provided on the upper surface of the flange portion 7c in the outer cylinder 7b of the shear spring means 5, as being integral to the rubber member 5a. The cushion member 11 functions to suppress shocks and noise when the abutment member 10 is brought into abutment with the flange portion 7c. Since the cushion member 11 is formed integrally with the rubber member 5a, it is possible to reduce the cost as compared to the case where these elements are separately provided.

Reference numeral 12 denotes a polytetrafluoroethylene layer as a sliding guide member on the surface of the lower face plate 2, which is opposite to the upper face plate 1. The polytetrafluoroethylene layer 12 serves, when the lower surface of the upper face plate 1 is in contact with the upper surface of the lower face plate 2, to realize a smooth horizontal movement between these plates. In the illustrated embodiment, a plurality of the polytetrafluoroethylene layer 12 is provided about the center axis of the lower face plate 2, with suitable distance between each other. Reference numeral 13 denotes an upper boss, which serves to secure the upper face plate 1 to a vehicle body side, and which is formed with a passage for supplying gas under a predetermined pressure to the air spring 4.

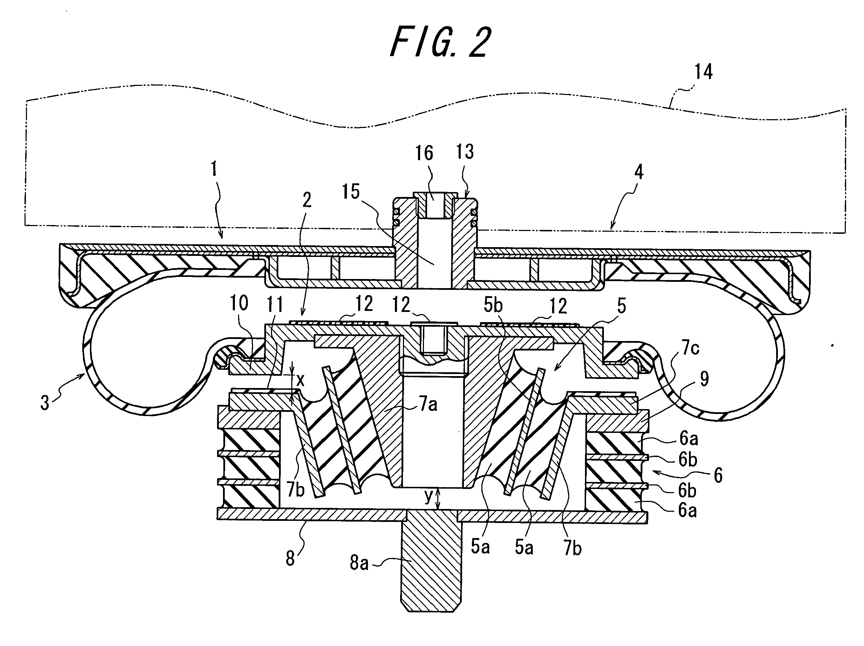

In another embodiment of the present invention, as shown in the longitudinal sectional view of FIG. 2, the upper boss 13 is provided with a center gas passage 15 for communicating the air spring 4 with an auxiliary tank 14 on the vehicle body side, and a throttle passage 16 is provided in the gas passage 15 for locally narrowing the latter.

In this instance, the throttle passage 16 allows the air spring device to exhibit the required damping function under the application of the vertical load, etc., when the pressurized gas flows between the air spring 4 and the auxiliary tank 14 due to the friction or diffusion of the pressurized gas.

Incidentally, the throttle passage 16 narrowing the gas passage 15 may be provided for the upper boss integrally with the gas passage 15. Alternatively, however, the throttle passage 16 may be formed in a separate member, which can be subsequently secured to the upper boss 13 by a thread-connection, welding, etc., to facilitate formation of the required throttle passage 16. Formation of the throttle passage 16 at either end portion of the gas passage 15 is advantageous in view of facilitated formation of the gas passage 15.

The air spring device shown in FIG, 2 is otherwise similar in structure to the embodiment of FIG. 1 described above.

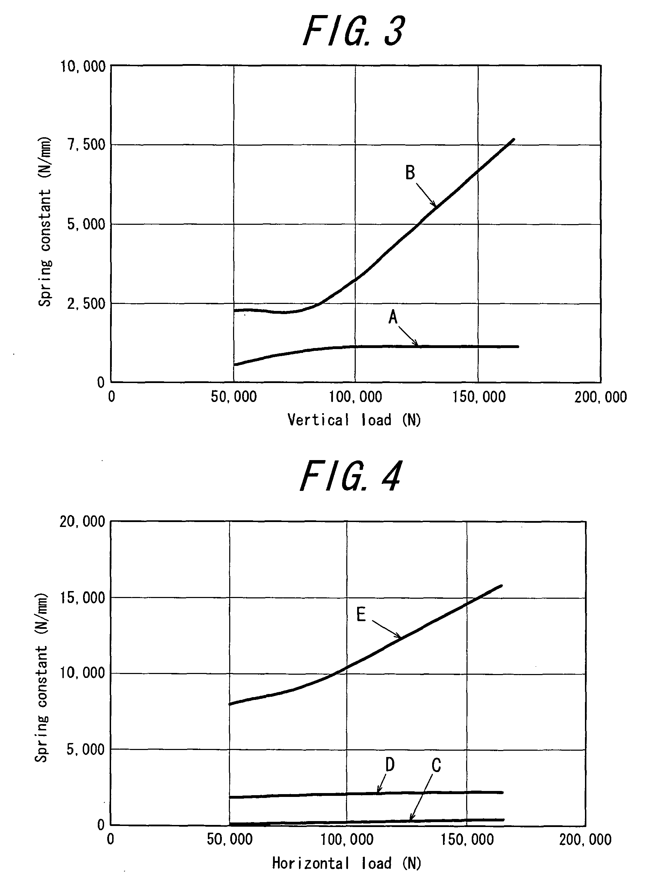

With the air spring device constructed as described above, during the normal running of a railway vehicle in the normal state of the air spring 4, under the series-connected structure of the air spring 4, the shear spring means 5 and the compression spring means 6, the vertical load is elastically supported primarily by the deformation of the air spring and the shear spring means 5, in particular its rubber members 5b, with a relatively resilient spring constant. Curve A in the graph of FIG. 3 represents the relationship between the magnitude of the load and the spring constant in such a state.

In this instance, furthermore, since the flow of the pressurized gas flows between the air spring 4 and the auxiliary tank 14 through the throttle passage 16 in the gas passage 15, the throttle passage 16 allows the air spring device to exhibit the required damping function under the application of the vertical load, etc., due to the friction or diffusion of the pressurized gas. Thus, the air spring device does not require the provision of damping means on the vehicle body side, such as a mechanical damper, to simplify the structure of the vehicle body side.

On the other hand, when the air spring 4 is in a deflated state due to puncture or the like, the vertical load is resiliently and elastically supported by the shear spring means 5 until it reaches the deformation limit, with a relatively small spring constant as represented by curve B in the graph of FIG. 3, to preserve acceptable riding comfort while allowing a safety running of the vehicle.

If the shear spring means 5 reaches its deformation limit and the abutment member 10 is thereby brought into abutment with the flange portion 7c of the outer cylinder 7b, the vertical load is elastically supported solely by the compression spring means 6 through the upper and lower face plates 1, 2 and the flange 7c. Thus, the spring constant increases substantially linearly along with an increase of the load. Due to such a relatively stiff spring constant, it is possible to suppress the change in vehicle height between the unloaded state and the fully loaded state of the vehicle within a sufficiently small range.

With the air spring device according to the present invention, furthermore, when a horizontal load is applied in a normal state of the air spring 4, the load is elastically supported by the horizontal displacement of the air spring 4 and the compression spring means 6 with particularly resilient spring characteristics as represented by curve C in the graph of FIG. 4. On the other hand, in the deflated state of the air spring 4 wherein the shear spring means 5 and the compression spring means 6 assume a series-connected structure, the horizontal load is elastically supported by the shearing deformation of the compression spring means 6 with a relatively small spring constant as represented by curve D in the graph of FIG. 4.

In the deflated state of the air spring 4, since the gap x is made smaller than the gap y as described above, even if the shear spring means 5 is subjected to shearing deformation to the limit position in which the abutment member 10 begins its function, the horizontal displacement of the shear spring means 5 relative to the lower end support plate 8 is fully permitted, thereby ensuring a smooth shearing deformation of the compression spring means 6. In the deflated state of the air spring 4, moreover, although the lower surface of the upper face plate 1 is brought into contact with the upper surface of the lower end plate 2, the relative horizontal displacement of the upper and lower face plates 1, 2 is permitted by the polytetrafluoroethylene layers 12 provided on the lower face plate 2 as described above.

Finally, it is noted that, according to the air spring device disclosed in Patent Document 1, when horizontal load is applied under a deflated state of the air spring, even until the metal contact state is reached, since mainly two type of elements, i.e., the elastic body and the damping body of so-called conical type, undergo compressive deformation as being arranged in parallel with each other, the load is supported with a relatively large spring constant as represented by curve E in the graph of FIG. 4, resulting in difficulty for preserving acceptable riding comfort of the vehicle, and difficulty for ensuring a safe running of the vehicle at high speed without the risk of derailment.

## Claims

1. An air spring device comprising, as being arranged in a series connection with each other:
- an air spring (4) having a gas-filled interior defined by an upper face plate (1), a lower face plate (2), and a cylindrical flexible diaphragm body (3) having end portions connected to the respective face plates (1 and 2);
- a shear spring means (5) including an inner cylinder (7a) and an outer cylinder (7b), as well as annular rubber members (5a) and annular rigid plates, (5b) which are alternately arranged between opposite peripheral surfaces of the inner and outer cylinders (7a and 7b), said shear spring means (5) being subjected to a shearing deformation in response to a vertical load; and
- a compression spring means (6) including an upper end ring (9) and a lower end support plate (8) as well as rubber members (6a) and rigid plates, (6b) which are alternately arranged between the upper end ring (9) and the lower end support plate (8), said compression spring means (6) being subjected to a compressive deformation in response to a vertical load; wherein
said compression spring means (6) comprises a laminated structure in which the rubber members (6a) of annular shape and the rigid plates (6b) of annular shape are alternately laminated with each other, said laminated structure being joined to the lower end support plate (8) and the upper end ring (9), and
said outer cylinder (7b) of the shear spring means (5) has a flange (7c) which is fitted with the upper end ring (9), and said inner cylinder (7a) of the shear spring means (5) is secured to a lower surface of the lower face plate (2); **characterized in that**
said air spring (4) means further comprises an abutment portion (10) for restricting a relative displacement between the inner and outer cylinders (7a and 7b) of the shear spring means (5) in a vertical direction so that a gap (y) is left between the inner cylinder (7a) and the lower end support plate (8) when said relative displacement is restricted.

2. The air spring device according to claim 1, wherein
said shear spring means (5) comprises a laminated structure in which the rubber members (5a) of frusto-conical shape and the rigid plates (5b) of frusto-conical shape are alternately laminated with each other, said laminated structure being joined to the inner and outer cylinders (7a and 7b).

3. The air spring device according to any one of claims 1 to 2, wherein said cylindrical flexible diaphragm body (3) of the air spring (4) has a self-sealing structure.

4. The air spring device according to any one of claims 1 to 3, further comprising a cushion member (11) provided between said abutment portion (10) and a member on the side of said compression spring means (6).

5. The air spring device according to claim 4, wherein said cushion member (11) is integral with a rubber member of the shear spring means (5).

6. The air spring device according to any one of claims 1 to 5, wherein said upper face plate (1) has a throttle passage that narrows a gas passage communicating the air spring (4) with an auxiliary air tank.

## Patentansprüche

1. Luftfedervorrichtung, die, in einer Anordnung durch Reihenschaltung geschaltet, aufweist:
- eine Luftfeder (4) mit einem gasgefüllten Inneren, das durch eine obere Frontplatte (1), eine untere Frontplatte (2) und einen zylindrischen flexiblen Membrankörper (3) mit Endabschnitten definiert wird, die mit den jeweiligen Frontplatten (1 und 2) verbunden sind;
- ein Scherungsfedermittel (5), einschließlich eines inneren Zylinders (7a) und eines äußeren Zylinders (7b) ebenso wie ringförmiger Gummielemente (5a) und ringförmiger starrer Platten (5b), die abwechselnd zwischen entgegengesetzten Umfangsflächen des inneren und des äußeren Zylinders (7a und 7b) angeordnet sind, wobei das Scherungsfedermittel (5) einer Scherverformung als Reaktion auf eine vertikale Belastung unterworfen wird; und
- ein Druckfedermittel (6), einschließlich eines oberen Endringes (9) und einer unteren Endauflagenplatte (8) ebenso wie Gummielementen (6a) und starren Platten (6b), die abwechselnd zwischen dem oberen Endring (9) und der unteren Endauflagenplatte (8) angeordnet sind, wobei das Druckfedermittel (6) einer Druckverformung als Reaktion auf eine vertikale Belastung unterworfen wird; wobei
das Druckfedermittel (6) eine Schichtstruktur aufweist, bei der die Gummielemente (6a) von ringförmiger Form und die starren Platten (6b) von ringförmiger Form abwechselnd miteinander geschichtet sind, wobei die Schichtstruktur mit der unteren Endauflagenplatte (8) und dem oberen Endring (9) verbunden ist, und wobei der äußere Zylinder (7b) des Scherungsfedermittels (5) einen Flansch (7c) aufweist, der an den oberen Endring (9) angepasst ist, und wobei der innere Zylinder (7a) des Scherungsfedermittels (5) an einer unteren Fläche der unteren Frontplatte (2) gesichert ist; **dadurch gekennzeichnet, dass**
das Luftfedermittel (4) außerdem einen Widerlagerabschnitt (10) für das Begrenzen einer relativen Verschiebung zwischen dem inneren und dem äußeren Zylinder (7a und 7b) des Scherungsfedermittels (5) in einer vertikalen Richtung aufweist, so dass ein Spalt (y) zwischen dem inneren Zylinder (7a) und der unteren Endauflagenplatte (8) verbleibt, wenn die relative Verschiebung begrenzt wird.

2. Luftfedervorrichtung nach Anspruch 1, bei der
das Scherungsfedermittel (5) eine Schichtstruktur aufweist, bei der die Gummielemente (5a) von kegelstumpfartiger Form und die starren Platten (5b) von kegelstumpfartiger Form abwechselnd miteinander geschichtet werden, wobei die Schichtstruktur mit dem inneren und dem äußeren Zylinder (7a und 7b) verbunden ist.

3. Luftfedervorrichtung nach einem der Ansprüche 1 bis 2, bei der der zylindrische flexible Membrankörper (3) der Luftfeder (4) eine selbstabdichtende Struktur aufweist.

4. Luftfedervorrichtung nach einem der Ansprüche 1 bis 3, die außerdem ein Pufferelement (11) aufweist, das zwischen dem Widerlagerabschnitt (10) und einem Element auf der Seite des Druckfedermittels (6) vorhanden ist.

5. Luftfedervorrichtung nach Anspruch 4, bei der das Pufferelement (11) in ein Gummielement des Scherungsfedermittels (5) integriert ist.

6. Luftfedervorrichtung nach einem der Ansprüche 1 bis 5, bei der die obere Frontplatte (1) einen Drosseldurchgang aufweist, der einen Gasdurchgang einengt, der die Luftfeder (4) mit einem Hilfsluftbehälter verbindet.

## Revendications

1. Dispositif à ressort pneumatique, comprenant, dans un agencement de connexion en série mutuelle :
- un ressort pneumatique (4) comportant un intérieur rempli de gaz, défini par une plaque de face supérieure (1), une plaque de face inférieure (2) et un corps de membrane cylindrique flexible (3), comportant des parties d'extrémité connectées aux plaques de face respectives (1 et 2) ;
- un moyen de ressort à cisaillement (5), englobant un cylindre interne (7a) et un cylindre externe (7b), ainsi que des éléments de caoutchouc annulaires (5a) et des plaques annulaires rigides (5b), agencés par alternance entre des surfaces périphériques opposées des cylindres interne et externe (7a et 7b), ledit moyen de ressort à cisaillement (5) étant soumis à une déformation par cisaillement en réponse à une charge verticale ; et
- un moyen de ressort de compression (6), englobant une bague d'extrémité supérieure (9) et une plaque de support d'extrémité inférieure (8), ainsi que des éléments de caoutchouc (6a) et des plaques rigides (6b), agencés par alternance entre la bague d'extrémité supérieure (9) et la plaque de support d'extrémité inférieure (8), ledit moyen de ressort de compression (6) étant soumis à une déformation par compression en réponse à une charge verticale ; dans lequel
ledit moyen de ressort de compression (6) comprend une structure stratifiée, dans laquelle les éléments de caoutchouc (6a) de forme annulaire et les plaques rigides (6b) de sorte annulaire sont stratifiés par alternance les uns sur les autres, ladite structure stratifiée étant reliée à la plaque de support d'extrémité inférieure (8) et à la bague d'extrémité supérieure (9) ; et
ledit cylindre externe (7b) du moyen de ressort à cisaillement (5) comporte une bride (7c) fixée sur la bague d'extrémité supérieure (9), ledit cylindre interne (7a) du moyen de ressort à cisaillement (5) étant fixé sur une surface inférieure de la plaque de face inférieure (2) ; **caractérisé en ce que**
ledit moyen de ressort pneumatique (4) comprend en outre une partie de butée (10) pour limiter un déplacement relatif entre les cylindres interne et externe (7a et 7b) du moyen de ressort à cisaillement (5) dans une direction verticale, de sorte qu'un espace (y) est ménagé entre le cylindre interne (7a) et la plaque de support d'extrémité inférieure (8) lorsque ledit déplacement relatif est limité.

2. Dispositif à ressort pneumatique selon la revendication 1, dans lequel
ledit moyen de ressort à cisaillement (5) comprend une structure stratifiée, dans laquelle les éléments de caoutchouc (5a) ayant une forme en tronc de cône et les plaques rigides (5b) ayant une forme en tronc de cône sont stratifiés par alternance les uns sur les autres, ladite structure stratifiée étant reliée aux cylindres interne et externe (7a et 7b).

3. Dispositif à ressort pneumatique selon l'une quelconque des revendications 1 à 2, dans lequel ledit corps de membrane cylindrique flexible (3) du ressort pneumatique (4) comporte une structure à auto-étanchéité.

4. Dispositif à ressort pneumatique selon l'une quelconque des revendications 1 à 3, comprenant en outre un élément de coussin (11), agencé entre ladite partie de butée (10) et un élément sur le côté dudit moyen de ressort de compression (6).

5. Dispositif à ressort pneumatique selon la revendication 4, dans lequel ledit élément de coussin (11) fait partie intégrante d'un élément de caoutchouc du moyen de ressort à cisaillement (5).

6. Dispositif à ressort pneumatique selon l'une quelconque des revendications 1 à 5, dans lequel ladite plaque de face supérieure (1) comporte un passage d'étranglement, rétrécissant un passage de gaz établissant une communication entre le ressort pneumatique (4) et un réservoir d'air comprimé auxiliaire.
